# EUROPÄISCHE PATENTANMELDUNG

(11) **EP 3 543 814 A1**
(43) Veröffentlichungstag der Anmeldung: **25.09.2019**
(21) Anmeldenummer: 18163076.5
(22) Anmeldetag: 21.03.2018
(51) Int. Cl.: G05B 19/418, B05C 5/02

(54) **VERFAHREN ZUR HERSTELLUNG VON VERBUNDWERKSTÜCKEN, ANLAGE UND FÜGEVORRICHTUNG**

(71) Anmelder: balti ag, 6340 Baar (CH)
(72) Erfinder: SCHOR, Raphael, 8911 Rifferswil (CH)
(74) Vertreter: Rutz & Partner

(57) **Zusammenfassung**

Das Verfahren und die Anlage dienen der Herstellung eines Verbundwerkstücks (10), das wenigstens ein Basiswerkstück (1) mit einer Basislinie (s_{B}) und ein Fügewerkstück (3) mit einer der Basislinie (s_{B}) zugewandten Fügelinie (s_{F}) aufweist, zwischen denen eine Raupe (2) eines klebenden oder nicht klebenden Zwischenmaterials eingefügt wird. Erfindungsgemäss wird das Basiswerkstück (1) auf ein Basiswerkzeug (41) aufgesetzt und von diesem stabil gehalten, oder das Fügewerkstück (3) auf ein Fügewerkzeug (42) aufgesetzt und von diesem stabil gehalten, wonach die Raupe (2) derart auf die Basislinie (s_{B}) des Basiswerkstücks (1) oder auf die Fügelinie (s_{F}) des Fügewerkstücks (3) aufgetragen wird, dass Abweichungen (a_{SB}) des tatsächlichen Verlaufs der Basislinie (s_{B}) von einer Basis-Solllinie (s_{BS}) und/oder Abweichungen (a_{SF}) des tatsächlichen Verlaufs der Fügelinie (s_{F}) von einer Füge-Solllinie (s_{FS}) kompensiert werden. Die Fügevorrichtung (4) umfasst das Basiswerkzeug (41) und ein Fügewerkzeug (42), die mittels einer Haltevorrichtung (5, 411) in einem definierten Abstand voneinander fixierbar sind.

## Beschreibung

Die Erfindung betrifft ein Verfahren zur Herstellung von Verbundwerkstücken, eine nach diesem Verfahren arbeitende Anlage sowie eine für dieses Verfahren vorgesehene Fügevorrichtung.

Zur Verbindung von Werkstücken, insbesondere eines Basiswerkstücks und eines Fügewerkstücks zur Herstellung eines Verbundwerkstücks, wird dazwischen oft ein klebendes oder nicht klebendes Zwischenmaterial eingefügt, das anschliessend verfestigt. Das Zwischenmaterial ist typischerweise ein Klebstoff, gegebenenfalls ein Schmelzklebstoff, oder ein klebender oder nicht klebender Dichtstoff, der in flüssiger Form auf das Basiswerkstück aufgetragen wird. Das Basiswerkstück kann z.B. eine Fahrzeugkarosserie bzw. ein Rahmen der Fahrzeugkarosserie sein, auf den ein Fügewerkstück, wie eine Glasscheibe aufgesetzt wird. Oft werden auch Kunststoffteile zusammengefügt.

Zwischenmaterial wird derart konditioniert, gegebenenfalls erwärmt, damit es in fliessfähigem Zustand ohne Veränderung zur richtigen Zeit, in der richtigen Menge, am richtigen Ort appliziert werden kann. Zwischenmaterial kann dabei eine oder mehrere Komponenten und Farben aufweisen. Mit der stoffschlüssigen Verbindung der Werkstücke durch klebendes Zwischenmaterial kann gleichzeitig eine Abdichtung erfolgen. Die Festigkeit und Dauerhaftigkeit moderner Klebstoffe gewährleistet dabei eine sichere und stabile Verbindung über den gesamten Lebenszyklus des Verbundwerkstücks. Voraussetzung ist, dass das Zwischenmaterial in der erforderlichen Qualität aufgetragen wird.

Bekannt sind verschiedene Auftragstechniken. Nebst den flächigen Auftragstechniken mit Abgabe durch kontaktloses Spritzen und Sprühen, Walzen, oder der Abgabe aus gegebenenfalls verstellbaren Schlitzdüsen, ist der Raupenauftrag nach wie vor von grosser Bedeutung. Anlagen und Vorrichtungen, insbesondere Heizvorrichtungen, Pumpen, Fördervorrichtungen, Dosieranlagen zur Abgabe von Zwischenmaterial bzw. Klebstoff, insbesondere Schmelzklebstoff, z.B. in Form einer Raupe, sowie entsprechende Automaten und Roboteranlagen sind z.B. aus den Internetseiten der Balti AG, CH-6340 Baar (http://www.balti.ch) bekannt.

Aus der EP2145691A1 ist eine Roboteranlage bekannt, die der Abgabe eines Zwischenmaterials an ein Werkstück, insbesondere an einen mit einer Glasscheibe abzudeckenden Fahrzeugrahmen, dient. Die Vorrichtung weist eine Steuereinheit auf, durch die eine der Abgabe des Zwischenmaterials dienende Abgabeeinheit mittels einer Antriebseinheit entlang einer zumindest teilweise gekrümmten, vorzugsweise in sich geschlossenen Bahn führbar ist, und durch die in Abhängigkeit der Position der Abgabeeinheit eine mit der Abgabeeinheit gekoppelte Fördervorrichtung steuerbar ist.

Gemäss der EP2145691A1 werden Roboter üblicherweise derart programmiert, dass einzelne Punkte eines Werkstückes Schritt für Schritt abgefahren werden. Die Steuereinheit des Roboters berechnet anhand der abzufahrenden Punkte, von Punkt zu Punkt, die Achsgeschwindigkeiten der einzelnen Roboterteile, um mit der geforderten Bahngeschwindigkeit den nächsten Punkt zu erreichen. Gestützt auf diese Berechnungen bzw. den so genannten Rechnervorlauf gibt nun die Steuereinheit Befehle an die vorhandenen Stellglieder ab, so dass an den jeweiligen Punkten rechtzeitig die erforderlichen Operationen durchgeführt werden können. Bei der Abgabe eines Zwischenmaterials an ein Werkstück werden zwei verschiedene Funktionen ausgeführt. Mit einer ersten Funktion wird vom Roboterarm ein Werkzeug entlang einer Bahn sequenziell zu den genannten Punkten geführt. Mit einer zweiten Funktion wird die Abgabe des Zwischenmaterials gesteuert. In Abhängigkeit des Verlaufs der ersten Funktion ist daher die zweite Funktion auszuführen. Für die zweite Funktion werden Informationen erzeugt, welche zum Verlauf der ersten Funktion und insbesondere zur Geschwindigkeit korrespondieren, mit der das Werkzeug, z.B. eine Klebstoffpistole, bewegt wird. Anhand dieser Informationen berechnet die Steuereinheit für die zweite Funktion den Fluss des Zwischenmaterials, der an der jeweiligen Position des Werkzeugs einzustellen ist, damit eine Raupe des Zwischenmaterials mit konstantem Querschnitt resultiert.

Bei der Verbindung von zwei Werkstücken mittels einer Raupe eines Zwischenmaterials wird normalerweise darauf geachtet, dass diese beim Zusammenfügen der beiden Werkstücke gleichmässig deformiert wird. Dazu werden Distanzelemente an den einander zugewandten Seiten der Werkstücke derart vorgesehen, dass diese in einem Abstand, der proportional zum Querschnitt der Raupe gewählt ist, voneinander gehalten werden. Die beiden Werkstücke sind daher mit einem konstanten Klebstoffspalt bzw. Materialspalt und dem dazwischen angeordneten klebenden oder nicht klebenden Zwischenmaterial miteinander verbunden. Die Aussenabmessungen des aus den beiden miteinander verbunden Werkstücken bestehenden Verbundwerkstücks sind daher unabhängig vom konstanten Materialspalt und werden nur durch die Fertigungstoleranzen der Werkstücke bestimmt, die jedoch nachteilig in Erscheinung treten können. Zudem ist die Verwendung von Distanzelementen oft unerwünscht.

Aufgrund von Fertigungstoleranzen der miteinander verbunden Werkstücke wird das Zwischenmaterial an Stellen, an denen die Werkstücke einen Materialüberschuss aufweisen, oft nach aussen verdrängt, wodurch austretendes Zwischenmaterial weitere Vorrichtungsteile verunreinigen kann und störend in Erscheinung tritt.

Ferner treten bei konventionellen Verfahren oft unerwünschte Verformungen der Raupe auf, die ästhetisch unvorteilhaft in Erscheinung treten. Der Verbindungsbereich, d.h. der Bereich der verfestigten Raupe bzw. das Kontaktprofil, wird daher üblicherweise abgedeckt, wodurch zusätzlicher Aufwand resultiert und sich der Querschnitt der Fensteröffnungen reduziert.

Der vorliegenden Erfindung liegt daher die Aufgabe zugrunde, ein verbessertes Verfahren und eine Anlage zur Herstellung von Verbundwerkstücken zu schaffen. Ferner ist eine Fügevorrichtung für die erfindungsgemässe Anlage zu schaffen.

Das erfindungsgemässe Verfahren und die erfindungsgemässe Anlage sollen es erlauben, zwei Werkstücke derart miteinander zu verbinden, dass eine zuverlässige Verbindung, gegebenenfalls Abdichtung, zwischen den beiden Werkstücken resultiert.

Das Zwischenmaterial, gegebenenfalls ein Schmelzklebstoff, soll zur richtigen Zeit, in der richtigen Menge, am richtigen Ort appliziert werden können.

Die resultierende Verbindung soll über den ganzen Bereich stabil sein und ein gleichmässiges Materialprofil zeigen, das ästhetisch nicht unvorteilhaft in Erscheinung tritt und daher nicht abgedeckt werden muss.

Die Aussenabmessungen des resultierenden Verbundwerkstücks sollen zudem praktisch unabhängig von Fertigungstoleranzen wenigstens eines der Werkstücke sein, die miteinander verbunden werden.

Das Verfahren soll mit einfachen Massnahmen durchführbar sein. Zusätzlicher Aufwand, z.B. zur Reinigung des Verbundwerkstücks aufgrund ausgetretenen Zwischenmaterials, soll vermieden werden.

Diese Aufgabe wird mit einem Verfahren gemäss Anspruch 1, einer zur Durchführung des Verfahrens geeigneten Anlage gemäss Anspruch 13 sowie einer Fügevorrichtung gemäss Anspruch 15 gelöst. Vorteilhafte Ausgestaltungen der Erfindung sind in weiteren Ansprüchen angegeben.

Das Verfahren und die Anlage dienen der Herstellung eines Verbundwerkstücks, das wenigstens ein Basiswerkstück mit einer Basislinie und ein Fügewerkstück mit einer der Basislinie zugewandten Fügelinie aufweist, zwischen denen eine Raupe eines klebenden oder nicht klebenden Zwischenmaterials eingefügt wird.

Erfindungsgemäss wird das Basiswerkstück auf ein Basiswerkzeug aufgesetzt und von diesem stabil gehalten. Alternativ oder zusätzlich wird das Fügewerkstück auf ein Fügewerkzeug aufgesetzt und von diesem stabil gehalten. Anschliessend wird die Raupe derart auf die Basislinie des Basiswerkstücks oder auf die Fügelinie des Fügewerkstücks aufgetragen, dass Abweichungen des tatsächlichen Verlaufs der Basislinie von einer Basis-Solllinie und/oder Abweichungen des tatsächlichen Verlaufs der Fügelinie von einer Füge-Solllinie kompensiert werden. Die Fügevorrichtung umfasst das Basiswerkzeug und ein Fügewerkzeug, die mittels einer Haltevorrichtung in einem definierten Abstand voneinander fixierbar sind. Sofern dies die Verbindungstechnik erfordert, kann die Raupe vorteilhaft auch in eine erste und eine zweite Teilraupe aufgeteilt werden, von denen die erste Teilraupe auf die Basislinie und die zweite Teilraupe auf die Fügelinie aufgetragen wird. Dabei kann erste Teilraupe die Abweichungen der Basislinie und die zweite Teilraupe die Abweichungen der Fügelinie kompensieren. Alternativ kann eine der Teilraupen die Abweichungen der Basislinie und der Fügelinie kompensieren, während die andere Teilraupe einen konstanten Volumenstrom aufweist. Durch diese Massnahme wird erreicht, dass das Zwischenmaterial für eine erste vorbestimmte Dauer an der Basislinie und eine zweite vorbestimmte Dauer an der Fügelinie anliegt, bevor der Fügevorgang erfolgt. Die erste und die zweite Dauer können dabei entsprechend dem Zwischenmaterial und dem Material des Basiswerkstücks oder des Fügewerkstücks gewählt werden.

Die Basis-Solllinie und die Füge-Solllinie werden vorzugsweise mit Bezug auf die Aussenabmessungen des Basiswerkstücks und des Fügewerkstücks festgelegt.

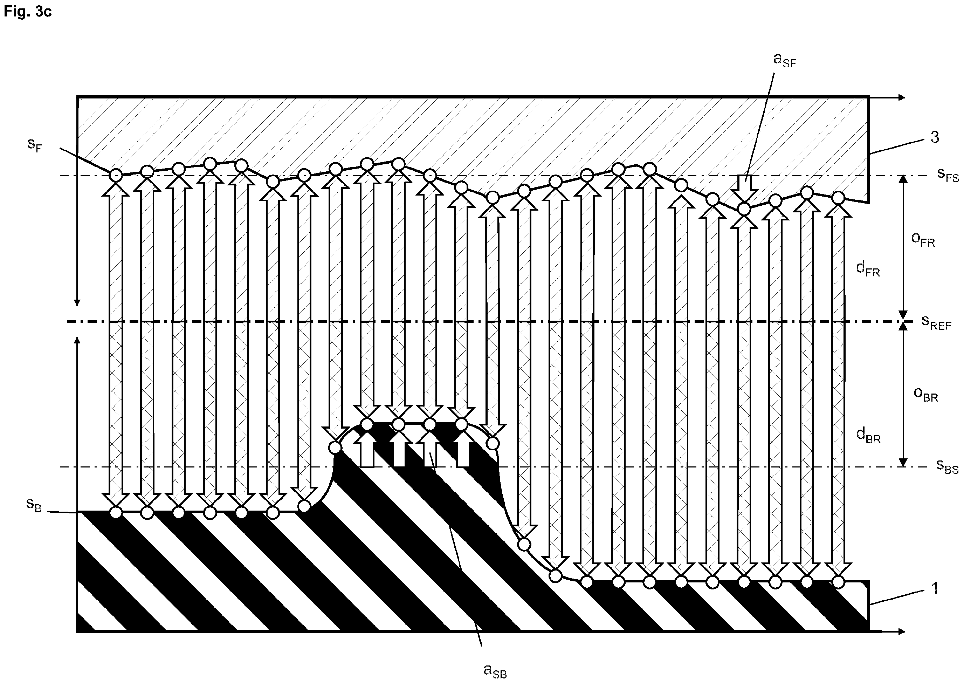

Vorzugsweise wird die Basis-Solllinie mit Bezug auf wenigstens einen Referenzpunkt oder wenigstens eine Referenzlinie festgelegt, die auf dem Basiswerkzeug vorgesehen sind. Die Füge-Solllinie wird vorzugsweise mit Bezug auf wenigstens einen Referenzpunkt oder wenigstens eine Referenzlinie festgelegt, die auf dem Fügewerkzeug vorgesehen sind. Die Position des Basiswerkzeugs und des Fügewerkzeugs während des Fügevorgangs können durch weitere Referenzpunkte festgelegt werden. Das Basiswerkzeug wird z.B. an Hauptpunkten des Referenzsystems positioniert. Das Fügewerkzeug kann in der Folge in Bezug auf diese Hauptpunkte oder in Bezug zu Referenzpunkten auf dem Basiswerkzeug montiert werden. Wiederum gilt die Möglichkeit der kinematische umkehrt. Durch die gewählten Referenzpunkte oder Referenzlinien werden die Aussenabmessungen des resultierenden Verbundwerkstücks bestimmt. Voraussetzung ist, dass das Basiswerkzeug und das Fügewerkzeug an definierten Positionen und somit in einem definierten Abstand voneinander gehalten werden. Ferner können auch externe Referenzpunkte oder Referenzlinien oder Referenzkörper vorgesehen werden. Voraussetzung ist somit, dass ein definiertes Referenzsystem vorhanden ist, welches erlaubt, das Basiswerkstück und das Fügewerkstück in einem definierten Abstand voneinander zu halten und den freiliegenden Raum zwischen der Basislinie und der Fügelinie (siehe z.B. Fig. 3c) mit der erforderlichen Menge eines Zwischenmaterials zu füllen.

Die Basislinie und die Fügelinie verlaufen streifenförmig und werden gemäss dem erfindungsgemässen Verfahren linear oder auch flächig vermessen. Bei der linearen Vermessung erfolgt diese vorzugsweise entlang der Mittellinie des Streifens der Basislinie und der Fügelinie. Idealerweise bildet diese Mittellinie einen Mittelwert der entsprechenden Querlinie, die quer zur Basislinie oder Fügelinie verläuft. Durch die Flächenmessung kann dieser Mittelwert präzisiert werden.

Die Basis-Solllinie und die Füge-Solllinie entsprechen dem gewünschten Sollverlauf der Basislinie oder Fügelinie. Signifikante Abweichungen von diesem Sollverlauf treten üblicherweise bei einem aus Kunststoff gefertigten Basiswerkstück auf. Abweichungen können jedoch auch beim Fügewerkstück auftreten welches z.B. aus Glas gefertigt ist. Das Basiswerkstück und/oder das Fügewerkstück können z.B. aus Kunststoff, Metall, Glas oder weiteren Materialien gefertigt werden, bei denen typischerweise die entsprechenden Fertigungstoleranzen auftreten. Bei den nachstehend beschriebenen Verfahren ist auch eine kinematische Umkehr möglich, sodass das Basiswerkstück und das Fügewerkstück gegeneinander austauschbar sind. Ebenso kann der Auftrag der Raupe erfolgen, indem diese mittels einer bewegten Düse entlang der Basislinie oder Fügelinie aufgetragen wird oder mittels einer stationären Düse abgegeben wird, während das Basiswerkstück oder das Fügewerkstück bewegt wird.

Nach dem Auftrag der Raupe, die einen beliebigen, z.B. runden oder rechteckigen Querschnitt aufweisen kann, auf das Basiswerkstück wird das Fügewerkstück in eine Fügeposition verschoben und dort von einer Fügevorrichtung gehalten, wobei die Fügeposition vorzugsweise derart gewählt wird, dass die Raupe mit einem Kontaktprofil vorbestimmter Breite an der Fügelinie anliegt.

Der Volumenstrom des Zwischenmaterials und somit der Querschnitt der Raupe wird derart gewählt, dass die Raupe nach dem Aufsetzen des Fügewerkstücks mit einem Kontaktprofil am Fügewerkstück anliegt, welches eine vorzugsweise definierte Breite aufweist, die eine sichere stoffschlüssige Verbindung und/oder sichere Abdichtung gewährleistet.

Das Basiswerkzeug dient typischerweise dem Halten und der Montage des Fügewerkstücks, kann in einem Endprodukt jedoch noch weitere Funktionen erfüllen. Das Fügewerkstück erfüllt normalerweise Funktionen, die für den Anwender des Endprodukts relevant sind. Dabei ist es oft erforderlich, dass das Fügewerkstück absolut präzise montiert wird. Durch das erfindungsgemässe Verfahren können Verbundwerkstücke mit konstanten Aussenabmessungen gefertigt werden. Die Position des Fügewerkstücks, welches in das Verbundwerkstück integriert ist, ist nicht mehr von Fertigungstoleranzen des Basiswerkstücks und/oder des Fügewerkstücks abhängig und liegt nach der Montage des Verbundwerkstücks in Bezug auf das vorgesehene Referenzsystem somit immer exakt an der festgelegten Position.

Beim Auftrag der Raupe auf die zuvor vermessene Basislinie des Basiswerkstücks werden Abweichungen von einer Solllinie kompensiert. Bei einer negativen Abweichung von der Solllinie, d.h. bei Materialmangel, wird der Volumenstrom des Zwischenmaterials erhöht, um den Materialmangel auszugleichen, und bei einer positiven Abweichung von der Solllinie, d.h. bei einem Materialüberschuss, wird der Volumenstrom des Zwischenmaterials reduziert, um den Materialüberschuss auszugleichen. Die entsprechende Steuerung des Volumenstroms erfolgt dabei derart, dass die Oberkante der Raupe vorzugsweise parallel zur Solllinie oder zu einer Referenzlinie verläuft, die vorzugsweise exakt zur Fügelinie des Fügewerkstücks korrespondiert.

Die Fügelinie des Fügewerkstücks liegt nach Erreichen der Fügeposition deckungsgleich mit der Referenzlinie oder in die eine oder andere Richtung dazu verschoben. Der jeweilige Durchmesser der Raupe muss daher nicht dem Abstand zwischen der Basislinie und der Referenzlinie entsprechen, sondern soll die Abweichung des Verlaufs der Basislinie von der Solllinie kompensieren. Die Fügeposition bzw. die Positionierung der Fügelinie bei der Kontaktierung der Raupe wird im Wesentlichen durch die Vorgaben der Verbindungstechnik, insbesondere unter Berücksichtigung der Breite des erwünschten Kontaktprofils entlang der Fügelinie gewählt.

Beim Aufsetzen des Fügewerkstücks kontaktiert die Raupe die Fügelinie des Fügewerkstücks typischerweise in gleicher Weise über die gesamte Länge. Bei der ersten Kontaktierung resultiert somit ein dünnes Kontaktprofil über die gesamte Länge der Fügelinie. Durch weitere Verschiebung des Fügewerkstücks gegen das Basiswerkstück kann dieses Kontaktprofil verbreitert werden. Dabei erfolgt eine praktisch gleichmässige Verbreiterung über die gesamte Länge der Fügelinie bzw. über die gesamte Länge des Kontaktprofils, welches normalerweise eine in sich geschlossene Schleife bildet. Nachstehend sind Werkstücke mit schleifenförmigen Basislinien und Fügelinien beschrieben. In gleicher Weise können Werkstücke miteinander verbunden werden, deren Basislinien und Fügelinien gerade oder gekrümmt entlang beliebigen Strecken verlaufen und nicht in sich geschlossen sind.

Da aufgrund von Änderungen des Volumenstroms der Querschnitt der Raupe minimal ändert, können minimale Änderungen des Kontaktprofils entsprechend auftreten. Sofern in einer Zone mit Materialüberschuss der Basislinie die Raupe mit reduziertem Querschnitt aufgetragen wurde, kann dort eine geringfügig geringere Breite des Kontaktprofils auftreten. Dies kann durch eine entsprechende Vergrösserung des Querschnitts der Raupe wieder ausgeglichen werden. Aufgrund der geringfügigen Änderungen der Breite des Kontaktprofils kann dies auch vernachlässigt werden.

Erfindungsgemäss Verbundwerkstücke können daher mit Kontaktprofilen gefertigt werden, die zumindest annähernd über den gesamten Verlauf konstant sind, wodurch eine gleichmässige stoffschlüssige Verbindung und/oder eine gleichmässige und zuverlässige Abdichtung über den gesamten Verlauf der Raupe bzw. des Kontaktprofils resultiert. Aufgrund der konstanten Breite des Kontaktprofils über die gesamte Länge tritt dieses nicht störend in Erscheinung. Auf die Verwendung von Abdeckelementen, die den Funktionsbereich des Fügewerkstücks, z.B. den transparenten Querschnitt einer Glasscheibe, einschränken, kann verzichtet werden.

Oft genügt die Vermessung des Basiswerkstücks. Sofern das Fügewerkstück ebenfalls relevante Fertigungstoleranzen aufweist, wird die Fügelinie vorzugsweise ebenfalls vermessen. Bei der Fügelinie festgestellte Abweichungen von der Füge-Solllinie, die vorzugsweise parallel zur Basis-Solllinie verläuft, können nun zusätzlich durch Steuerung des Volumenstroms des Zwischenmaterials der Raupe gesteuert werden. Dabei überlagern sich die Abweichungen der Basislinie und der Fügelinie von einer vorzugsweise identischen Solllinie, sodass sich Materialmangel und Materialüberschuss der Basislinie und Materialmangel und Materialüberschuss der Fügelinie entsprechend überlagern und in Summe durch Steuerung des Volumenstromes des Zwischenmaterials der Raupe kompensiert werden können. Materialmangel an der Basislinie oder der Fügelinie und Materialüberschuss an der Fügelinie oder der Basislinie können sich dabei auch gegenseitig aufheben, sodass keine Änderung des Volumenstromes des Zwischenmaterials erforderlich ist.

Das erfindungsgemässe Verfahren ergibt somit zahlreiche Vorteile. Die Verbindungsqualität ist unabhängig von Fertigungstoleranzen der Werkstückteile bzw. des Basiswerkstücks und des Fügewerkstücks. Eine gleichmässiger Stoffschluss und/oder eine gleichmässige Abdichtung sind ebenso gewährleistet, wie ein gleichmässiges Kontaktprofil z.B. auf einer Glasscheibe. Insbesondere sind auch konstante Aussenabmessungen der hergestellten Verbundwerkstücke gewährleistet, weshalb bei der Installation oder Montage dieser Verbundwerkstücke im Endprodukt keine Probleme auftreten.

Damit das gegebenenfalls mit der Raupe versehene Basiswerkstück und das gegebenenfalls mit der Raupe versehene Fügewerkstück mit Bezug auf ein Referenzsystem in einem gewünschten Abstand voneinander gehalten werden können, ist eine Fügevorrichtung vorgesehen, welche das zum Halten des Basiswerkstücks dienende Basiswerkzeug und ein zum Halten des Fügewerkstücks dienendes Fügewerkzeug sowie eine Haltevorrichtung aufweist. Das Basiswerkzeug und das Fügewerkzeug können daher in einen definierten Abstand zueinander oder zu einem Referenzobjekt gebracht und mittels der Haltevorrichtung gegenseitig fixiert werden. Vorzugsweise ist das Basiswerkzeug stationär und das Fügewerkzeug z.B. mittels eines Roboters oder präziser Mechanik gegenüber dem Basiswerkzeug verschiebbar und in einer vorbestimmten Position bzw. einer Fügeposition fixierbar. Die Haltevorrichtung kann der Roboter selbst sein oder kann aus Distanzelementen oder positionierten Auflagen bestehen, mittels denen der Abstand zwischen dem Basiswerkzeug und dem Fügewerkzeug definiert wird. Die Distanzelemente sind vorzugsweise mit dem Basiswerkzeug oder mit dem Fügewerkzeug verbunden. Vorzugsweise sind die Distanzelemente säulenartig ausgebildet und/oder vorzugsweise entlang ihrer Längsachse in der Länge justierbar. Gegebenenfalls bestehen die Distanzelemente aus zwei oder mehreren Teilen, die gegeneinander verschiebbar und fixierbar sind, um eine gewünschte Länge einzustellen.

In einer vorzugsweisen Ausgestaltung wird die Abweichung des tatsächlichen Verlaufs der Basislinie von der Basis-Solllinie durch Vermessung des tatsächlichen Verlaufs der Basislinie bestimmt. Die Basislinie wird z.B. optisch erfasst und ausgewertet. Rechnerisch ermittelte Daten der Basislinie werden z.B. mit einer rechnerisch festgelegten Solllinie verglichen, um Abweichungen, d.h. Materialmangel und Materialüberschuss entlang der Basislinie festzustellen. Bei dieser Ausgestaltung der Erfindung wird die Solllinie der Basislinie oder eine dazu korrespondierende Referenzlinie rechnerisch berücksichtigt, ohne dass eine solche Solllinie oder Referenzlinie im Raum tatsächlich realisiert wird.

In einer weiteren bevorzugten Ausgestaltung wird die Abweichung des tatsächlichen Verlaufs der Basislinie von der Basis-Solllinie durch Messung des Verlaufs der Distanz zwischen der Basislinie und einer Referenzlinie bestimmt, die von der Basis-Solllinie um einen konstanten Offset beabstandet ist. Bei dieser Ausgestaltung der Erfindung wird die Basis-Solllinie oder eine dazu korrespondierende Referenzlinie im Raum tatsächlich realisiert und in Bezug auf diese Referenzlinie wird der Abstand zur Basislinie festgestellt.

Die Vermessung der Basislinie und/oder vorzugsweise auch der Fügelinie kann daher auf beliebige Weise erfolgen.

Vorzugsweise erfolgt die Messung des Verlaufs der Distanz zwischen der Referenzlinie und der Basislinie oder des tatsächlichen Verlaufs der Basislinie:
a) sequenziell durch punktuelle Messungen anhand einer Messvorrichtung, vorzugsweise eines Laserdistanzsensors, eines konfokalen Distanzsensors oder eines mechanischen Messtasters, die entlang der Referenzlinie geführt wird und die die Basislinie optisch oder mechanisch abtastet; oder
b) durch eine Linienmessung, vorzugsweise durch Lasertriangulation oder mittels eines Laserscanners; oder
c) durch eine Flächenmessung, vorzugsweise mittels eines 3D-Laserscanners, durch Stereovision oder mit strukturiertem Licht.

Wie beschrieben, können die Basislinie und die Fügelinie linear oder flächig vermessen werden. Dazu kann eine im Raum festinstallierte oder mobile Messvorrichtung verwendet werden. Vorzugsweise ist ein Roboter mit einem Roboterarm vorgesehen, der die Messvorrichtung hält und kontinuierlich oder schrittweise entlang der Referenzlinie führt. Während der Fahrt oder des Stillstands des Roboterarms werden anhand der Messvorrichtung Punktmessungen oder eine Linienmessung durchgeführt. Der Roboterarm hält vorzugsweise einen Roboterkopf, der mit allen notwendigen Werkzeugen, Messwerkzeugen und Arbeitswerkzeugen, wie einer Düse zur Abgabe der Raupe, bestückt ist oder wahlweise bestückt werden kann. Oft wird vorgesehen, dass der Roboter die einzelnen Werkzeuge tragen oder wahlweise aufnehmen und verwenden kann. Der Roboterkopf kann auch die zur Abgabe des Zwischenmaterials vorgesehene Abgabevorrichtung bzw. Dosiervorrichtung oder Fördervorrichtung oder Teile davon tragen, wie eine Heizvorrichtung, eine Dosierpumpe, eine Zahnradpumpe, eine Förderschnecke oder dergleichen.

Für den Roboterkopf oder die damit getragenen Werkzeuge werden vorzugsweise Bahnpunkte entlang der Referenzlinie und vorzugsweise den Bahnpunkten zugeordnete Geschwindigkeiten bestimmt und abgespeichert. Der Roboterkopf kann daher eine vorzugsweise in sich geschlossene Bahn entlang der Referenzlinie mit einer vorgesehenen Geschwindigkeit und mit allfälligen Haltepunkten abfahren, während die Werkzeuge ihre Aufgaben erfüllen. Die Bahnpunkte können mit einer beliebig hohen Auflösung vorgesehen werden, sodass die Referenzbahn mit maximaler Präzision abgefahren wird und das Basiswerkstück und/oder das Fügewerkstück mit maximaler Präzision vermessen werden kann.

Die Abgabe der Raupe kann während der Fahrt entlang der Referenzlinie synchron zur Vermessung der Basislinie erfolgen. Der Roboterkopf trägt z.B. die Messvorrichtung und vermisst mit dieser die Basislinie. Gleichzeitig trägt der Roboterkopf eine Düse zur Abgabe der Raupe. Bei der Fahrt entlang der Referenzlinie werden die für die Basislinie ermittelten Messdaten online ausgewertet. Mit minimaler, streckenbezogener Verzögerung wird der erforderliche Volumenstrom für die Raupe errechnet, sodass dieser Volumenstrom fast gleichzeitig mit der Messung korrekt gesteuert werden kann. Dabei wird der Abstand zwischen der Messvorrichtung und der Düse sowie die Geschwindigkeit des Roboterkopfs berücksichtigt.

Alternativ kann die Messung der Basislinie vollständig durchgeführt und erst anschliessend die Raupe auf die Basislinie aufgetragen werden. Bei dieser Ausgestaltung kann der Roboterkopf das Messwerkzeug und das Abgabewerkzeug gleichzeitig tragen oder sequenziell aufnehmen und ablegen.

Der Volumenstrom des Zwischenmaterials zur Abgabe der Raupe wird dabei unter Berücksichtigung der Abgabegeschwindigkeit der Raupe bzw. der Geschwindigkeit der Werkzeuge bei der Fahrt entlang der Basislinie gesteuert. Ebenso kann bei Bedarf die Flughöhe der Düse gegenüber dem Werkstück angepasst werden

Nachfolgend wird die Erfindung anhand von Zeichnungen näher erläutert. Dabei zeigt:

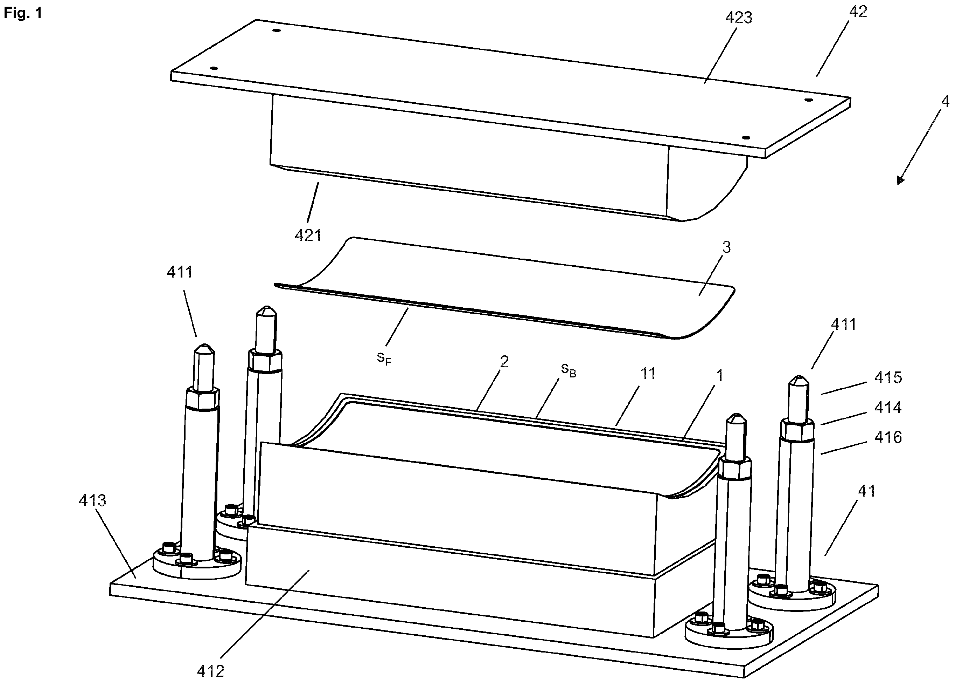

- Fig. 1: in Explosionsdarstellung, ein Basiswerkstück 1, welches nach dem erfindungsgemässen Verfahren mit einem Fügewerkstück 3 verbunden wird und eine Fügevorrichtung 4 mit einem Basiswerkzeug 41, welches das Basiswerkstück 1 trägt, und einem Fügewerkzeug 42, mittels dessen das Fügewerkstück 3 in eine Fügeposition überführbar und in dieser Fügeposition fixierbar ist;

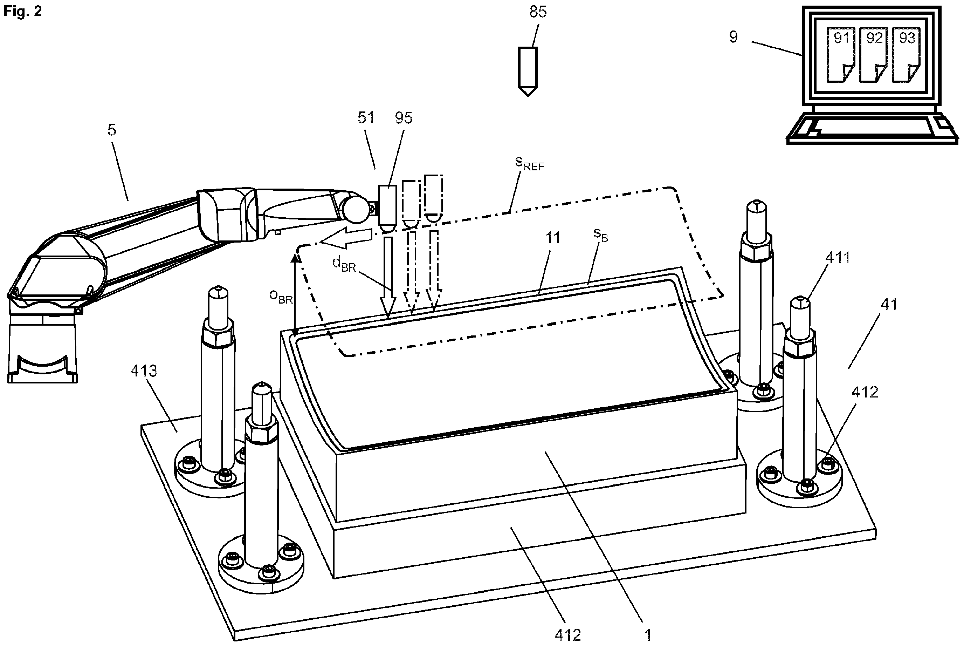

- Fig. 2: eine zur Durchführung des erfindungsgemässen Verfahrens vorgesehene erfindungsgemässe Anlage mit einem Roboter 5, mittels dessen das Basiswerkstück 1 vermessen wird bevor eine entsprechend dosierte Raupe aufgetragen und das Fügewerkstück 3 aufgesetzt wird;

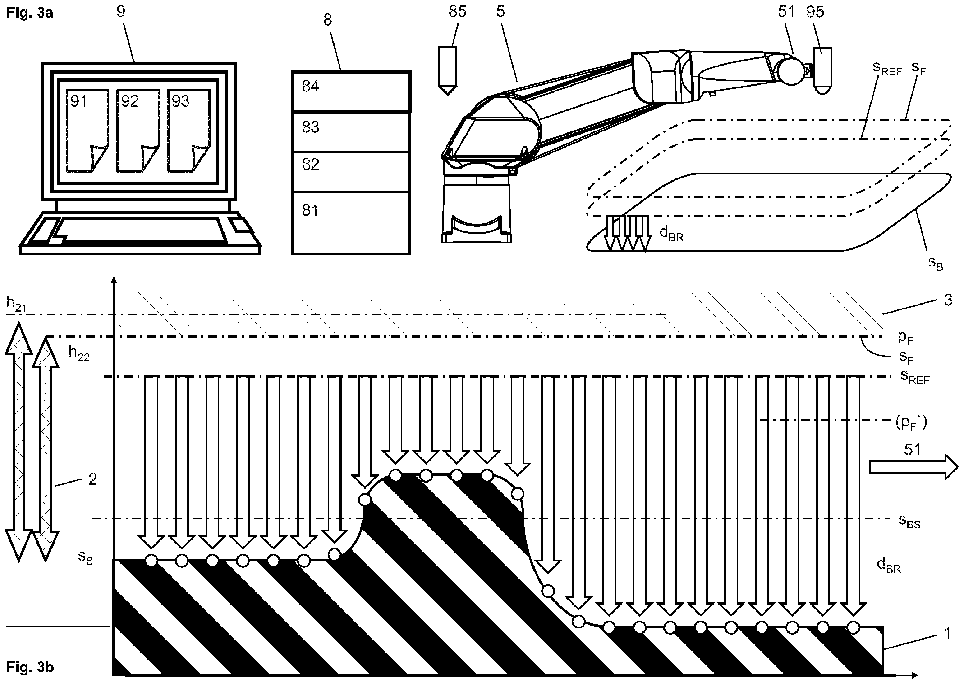

- Fig. 3a: die Anlage von Fig. 2 zusätzlich mit der Abgabevorrichtung 8 für das Zwischenmaterial, die mehrere Vorrichtungsmodule 81, 82, 83, 84 umfasst;
- Fig. 3b: den Verlauf einer Basislinie s_{B} auf dem Basiswerkstück 1, auf die die Raupe 2 aufgetragen wird, und die gemessenen Distanzen d_{BR} zwischen der Basislinie s_{B} und einer Referenzlinie s_{REF};
- Fig. 3c: exemplarisch den Verlauf der Basislinie s_{B} auf dem Basiswerkstück 1 und den Verlauf der Fügelinie s_{F} auf dem Fügewerkstück 3, gemessene Distanzen d_{BR} zwischen der Basislinie s_{B} und der Referenzlinie s_{REF}, gemessene Distanzen d_{FR} zwischen der Fügelinie s_{F} und der Referenzlinie s_{REF}; die Basis-Solllinie s_{BS} und die Füge-Solllinie s_{FS}, den Offset o_{BR}, o_{FR} zwischen der Basis-Solllinie s_{BS} und der Füge-Solllinie s_{FS} und der Referenzlinie s_{REF}, sowie gemessene Abweichungen a_{SB}, a_{SF} der Basislinie s_{B} und der Fügelinie s_{F} von der Basis-Solllinie s_{BS} bzw. der Füge-Solllinie s_{FS};

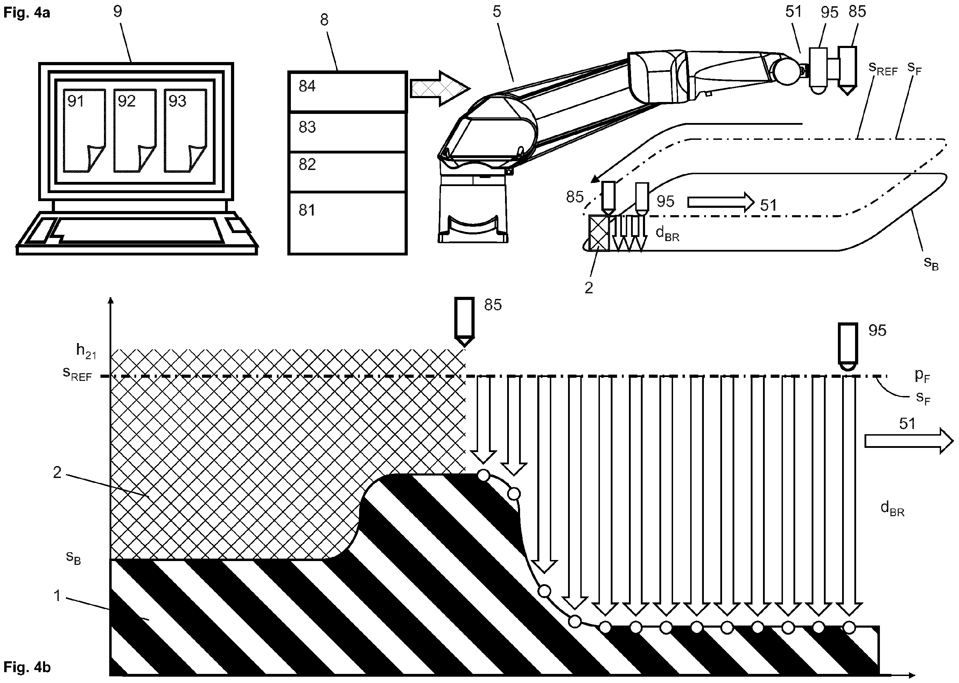

- Fig. 4a: die Anlage von Fig. 2 mit dem Roboter 5, der die Messvorrichtung 95 und eine Düse 85 zur Abgabe der Raupe 2 trägt;
- Fig. 4b: den Verlauf der Basislinie s_{B} auf dem Basiswerkstück 1 mit den gemessenen Distanzen d_{BR} zwischen der Basislinie s_{B} und der Referenzlinie s_{REF} sowie eine simultan zur Messung aufgetragene Raupe 2, die entsprechend den gemessenen Abweichungen a_{SB}, a_{SF} der Basislinie s_{B} und der Fügelinie s_{F} von der Basis-Solllinie s_{BS} bzw. der Füge-Solllinie s_{FS}; und den entsprechend berechneten Volumenänderungen auf die Basislinie s_{B} aufgetragen wird;

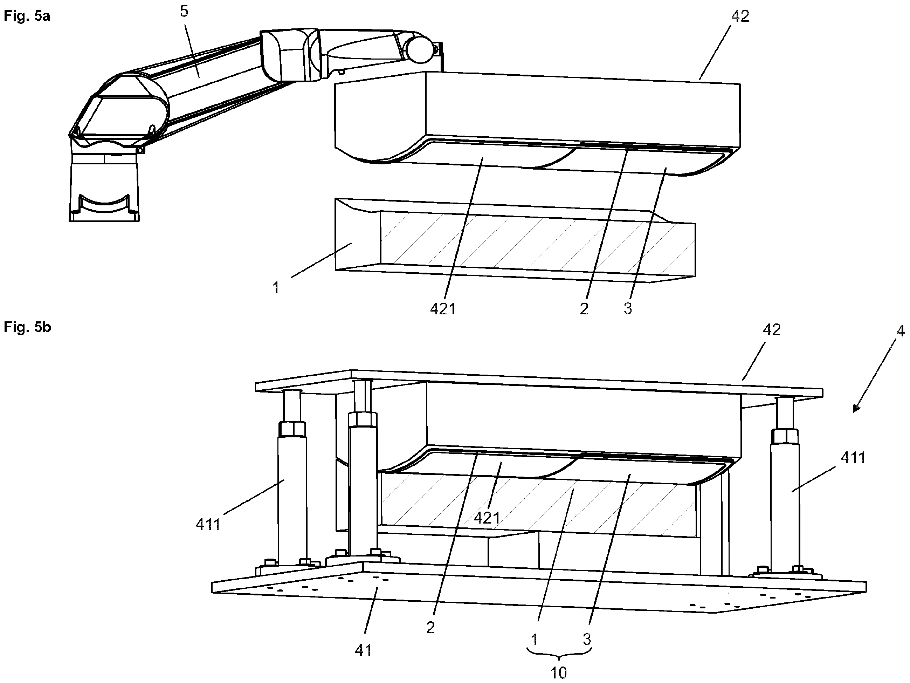

- Fig. 5a: das Fügewerkzeug 42 mit dem daran haftenden Fügewerkstück 3 (in Schnittdarstellung gezeigt), welches mittels des Roboters 5 gegen das mit der Raupe 2 versehene Basiswerkstück 1 in eine Fügeposition geführt und gegebenenfalls dort gehalten wird bis eine haltende Verbindung entstanden ist; und
- Fig. 5b: die Fügevorrichtung 4 von Fig. 1 mit dem auf das Basiswerkzeug 41 aufgesetzten Fügewerkzeug 42 und dem Basiswerkstück 1 (in Schnittdarstellung gezeigt) und dem Fügewerkstück 3 (in Schnittdarstellung gezeigt), die von der Fügevorrichtung 4 in einem definierten Abstand voneinander gehalten sind und zwischen denen die Raupe 2 vorgesehen ist.

Fig. 1 zeigt in Explosionsdarstellung, eine Fügevorrichtung 4 und ein Basiswerkstück 1, welches nach dem erfindungsgemässen Verfahren mit einem Fügewerkstück 3 verbunden wird. Das Fügewerkstück 3 ist eine Scheibe, die in einen am Basiswerkstück 1 vorgesehenen Rahmen 11 eingesetzt wird. Entlang dem Rahmen 11 verläuft eine in sich geschlossene Basislinie s_{B}, entlang der nach dem erfindungsgemässen Verfahren eine Raupe 2 aufgetragen wurde. Das Fügewerkstück 3 weist auf der dem Basiswerkstück 1 zugewandten Seite peripher eine in sich geschlossene Fügelinie s_{F} auf, die deckungsgleich zur Basislinie s_{B} ist. Die Fügelinie s_{F} und die Basislinie s_{B} sind dabei die Linien, an denen die Raupe 2 nach dem Auftragen auf das Basiswerkstück 1 und nach dem Verbinden des Basiswerkstücks 1 und des Fügewerkstücks 3 und somit nach Fertigstellung des Verbundwerkstück 10 anliegen wird (siehe Fig. 5b).

Zum Verbinden des Basiswerkstücks 1 und des Fügewerkstücks 3 ist die Fügevorrichtung 4 vorgesehen, die ein Basiswerkzeug 41 und ein Fügewerkzeug 42 sowie eine Haltevorrichtung umfasst. Das Basiswerkzeug 41 umfasst eine am Boden liegende Basisplatte 413, auf der Stützelemente 412 und vier Distanzelemente bzw. Distanzsäulen 411 angeordnet sind, auf die das Fügewerkzeug 42 aufgesetzt werden kann. Die Distanzsäulen 411, welche die Haltevorrichtung und gleichzeitig Referenzpunkte bilden, sind in der Länge entlang ihrer Längsachse justierbar. Dazu umfasst jede Distanzsäule 411 eine Gewindestange 415, die in ein an der Basisplatte 413 festgeschraubtes Rohr 416 eingesetzt und mittels eines Justierelements 414, hier in der Ausgestaltung einer Schraubenmutter, entlang der Längsachse verschiebbar gehalten ist. Die Distanzsäulen 411 bilden daher eine Haltevorrichtung, die es erlaubt, das Basiswerkzeug 41 und das Fügewerkzeug 42 in einem gewünschten gegenseitigen Abstand zu halten.

Das Fügewerkzeug 42 weist eine Fügeplatte 421 auf, die auf die Distanzsäulen 411 aufgesetzt werden kann und an deren Unterseite eine Vakuumvorrichtung 421 vorgesehen ist, mittels der das Fügewerkstück 3 erfasst und gehalten werden kann.

Das Basiswerkstück 1 wird auf die Stützelemente 412 aufgesetzt und vorzugsweise mittels Schrauben fixiert. Gemäss dem erfindungsgemässen Verfahren, das nachstehend im Detail erläutert wird, wird das Basiswerkstück 1 nun vermessen und entsprechend den ermittelten Messdaten mit einer entsprechend dimensionierten Raupe 2 versehen.

Abschliessend wird das Fügewerkzeug 42 mit dem Fügewerkstück 3 gegen das Basiswerkstück 1 geführt und auf die Distanzsäulen 411 des Basiswerkzeugs 41 aufgesetzt. Der Abstand zwischen dem Basiswerkzeug 41 und dem Fügewerkzeug 42 wurde mit den Distanzsäulen 411 derart eingestellt, dass das Fügewerkstück 3 gleichmässig an der Raupe 2 anliegt und diese derart deformiert, dass entlang der Fügelinie s_{F} ein Kontaktprofil der Raupe 2 mit einer gewünschten Breite resultiert.

Die Verschiebung des Fügewerkzeugs 42 kann z.B. mittels des Roboters von Fig. 5a erfolgen. Der Roboter 5 kann das Fügewerkzeug 42 präzise verschieben und halten, weshalb der Roboter 5 in Verbindung mit dem Basiswerkzeug 41 ebenfalls eine Fügevorrichtung 4 bilden kann. Auf die Distanzsäulen 411 kann in diesem Fall verzichtet werden. Nachteilig ist dabei, dass das Fügewerkzeug 42 bis zur Verfestigung des Zwischenmaterials bzw. der Raupe 2 gehalten werden muss und der Roboter 5 für andere Arbeiten nicht zur Verfügung steht. Bevorzugt wird daher die Fügevorrichtung von Fig. 5b verwendet, die nach dem Verbinden des Basiswerkstücks 1 und des Fügewerkstücks 3 bzw. nach der Herstellung des Verbundwerkstücks 10 beiseite geschoben werden kann, bis das Zwischenmaterial ausgehärtet ist. In vorzugsweisen Ausgestaltungen ist die Fügevorrichtung 4 daher verschiebbar gelagert, z.B. auf Rollen oder Gleitelementen.

Fig. 2 zeigt eine zur Durchführung des erfindungsgemässen Verfahrens vorgesehene erfindungsgemässe Anlage, die mit einem Roboter 5 ausgerüstet ist. Das Basiswerkstück 1 ist auf dem Basiswerkzeug 41 montiert und fixiert. Der Roboter 5 umfasst einen Rotorkopf 51, der wahlweise Werkzeuge aufnehmen kann oder der bevorzugt mit allen für die Durchführung des Verfahrens erforderlichen Werkzeugen ausgerüstet ist. In der vorliegenden Ausgestaltung der Erfindung wird mittels des Roboters 5 und einer damit gehaltenen Messvorrichtung 95 das Basiswerkstück 1 entlang dem Rahmen 11 bzw. entlang der auf dem Rahmen 11 vorgesehenen Basislinie s_{B} vermessen. Fig. 2 zeigt ferner schematisch eine Düse 85, mittels der eine Raupe 2 abgegeben werden kann. Diese Düse 85 ist vorzugsweise permanent auf dem Kopf 51 des Roboters 5 montiert oder kann wahlweise von diesem geholt, verwendet und wieder abgesetzt werden. Vorzugsweise ist die Düse 85 zusammen mit einer Dosiervorrichtung 84 (siehe Fig. 3a) auf dem Roboterkopf installiert.

Der Roboter 5 und die Messvorrichtung 95 werden von einer Steuervorrichtung 9 gesteuert, die nebst allen erforderlichen Basisprogrammen, wie Betriebsprogrammen und Kommunikationsprogrammen, über ein Steuerungsprogramm 91 für den Roboter 5, ein Mess- und Kalkulationsprogramm zur Vermessung des Basiswerkstücks 1 und/oder des Fügewerkstücks 3, zur Berechnung der erforderlichen Volumenabweichungen der Raupe und zur Bildung von Stellgrössen zur Steuerung der Abgabevorrichtung 8 für das Zwischenmaterial bzw. die Raupe (siehe Fig. 3a) sowie ein Steuerungsprogramm für die Abgabevorrichtung 8 bzw. Dosiervorrichtung 84 und dessen Module umfasst. Es werden daher wenigstens drei Prozesse realisiert, ein erster Prozess zur Steuerung des Roboters 5 bei der Vermessung des Basiswerkstücks 1 und bei der Abgabe der Raupe 2, ein zweiter Prozess zur Vermessung des Basiswerkstücks 1 und/oder des Fügewerkstücks 3 mit Steuerung wenigstens einer Messvorrichtung 95 und zur Bildung von Stellgrössen, sowie ein dritter Prozess zur Steuerung der gesamten Abgabevorrichtung 8 unter Berücksichtigung der vom zweiten Prozess ermittelten Stellgrössen. Die Modularisierung der Software zur Realisierung der genannten Prozesse kann beliebig gewählt werden, d.h. die gesamte Lösung kann in einem oder mehreren Hardware und Softwaremodulen 91, 92, 93 implementiert werden.

Im gezeigten Zustand der Anlage wird der erste Prozess ausgeführt und der Roboterkopf 51 entlang einer Referenzlinie s_{REF} geführt. Gleichzeitig wird der zweite Prozess ausgeführt und die Basislinie s_{B} des Basiswerkstücks 1 vermessen. Die Referenzlinie s_{REF} entspricht der Solllinie oder Ideallinie der Basislinie s_{B} des Basiswerkstücks 1, d.h. der Basis-Solllinie s_{BS}, ist aber um einen konstanten Offset o_{BR} gegenüber der Basislinie s_{B} verschoben. Dieser Offset o_{BR} beträgt z.B. einige Zehntels-Millimeter oder einige Millimeter und ist in Fig. 2 grösser gezeigt. Die Referenzlinie s_{REF} umfasst Bahnpunkte, die für den Roboter 5 mit der gewünschten Auflösung berechnet wurden und entlang denen der Roboterkopf 51 bzw. die Messvorrichtung 95 mit einer vorgegebenen, vorzugsweise konstanten Geschwindigkeit geführt wird. Die Messvorrichtung 95 umfasst z.B. einen Laserdistanzsensor, einen konfokalen Distanzsensor oder einen mechanischen Messabtaster. Alternative Messmethoden, z.B. Linienmessung, vorzugsweise durch Lasertriangulation oder mittels eines Laserscanners, oder Flächenmessung, vorzugsweise mittels eines 3D Laserscanners, durch Stereovision oder mit strukturiertem Licht, wurden oben bereits genannt.

Mittels der Messvorrichtung 95 wird die Distanz d_{BR} zwischen der Basislinie s_{B} und der Referenzlinie s_{REF} gemessen. Sofern die Basislinie s_{B} der Basis-Solllinie s_{BS} folgt und somit der Referenzlinie s_{REF} entspricht, ergibt die Differenz der gemessenen Distanz d_{BR} und des konstanten Offsets o_{BR} stets null. Abweichungen der Basislinie s_{B} von der Basis-Solllinie s_{BS} können daher durch Differenzbildung zwischen der gemessenen Distanz d_{BR} und dem konstanten Offset o_{BR} berechnet und als Stellgrösse an den dritten Prozess bzw. an das Modul 93 abgegeben werden, welches den Volumenstrom der Raupe 2 steuert. Die ermittelten Stellgrössen können für die vermessene Basislinie s_{B} gespeichert und zu einem späteren Zeitpunkt, z.B. nachdem der Roboter 5 die Messvorrichtung 95 abgesetzt und stattdessen die Düse 85 erfasst hat, wieder abgerufen und angewendet werden. Sofern der Roboterkopf 51 mit der Messvorrichtung 85 und der Düse 95 ausgerüstet ist, können die Stellgrössen auch während der Vermessung der Basislinie s_{B} angewendet werden, d.h. alle drei Prozesse, der Prozess der Robotersteuerung, der Prozess zur Vermessung des Basiswerkstücks 1 und zur Bildung der Stellgrössen sowie der Prozess zur Abgabe der Raupe 2 können simultan ausgeführt werden. Der zweite und der dritte Prozess laufen dabei zeitlich gegeneinander verschoben vorzugsweise unter Berücksichtigung von Geschwindigkeit und Position, d.h. der zweite Prozess ermittelt zuerst die Stellgrössen, welche der dritte Prozess nachfolgend anwendet.

Die Vermessung der Fügelinie sF des Fügewerkstücks 3 erfolgt vorzugsweise in gleicher Weise. Das Fügewerkstück 3 wird vorzugsweise von einem zweiten Roboter in einer definierten Position gehalten.

Die mit Bezug auf Fig. 2 beschriebenen Verfahrensprozesse werden nachstehend mit Bezug auf Fig. 3a und Fig. 3b exemplarisch erläutert.

Fig. 3a zeigt die Anlage von Fig. 2 zusätzlich mit der Abgabevorrichtung 8, die mehrere symbolisch gezeigte Vorrichtungsmodule 81, 82, 83, 84 umfasst, vorzugsweise einen Zwischenmaterialspeicher bzw. Klebstoffspeicher 81, eine Heizvorrichtung 82, eine Fördervorrichtung 83, eine Dosiervorrichtung 84 und die Düse 85. Einige dieser Module 81, 82, 83, 84 können nebst der Düse 85 auch auf dem Roboterkopf 51 angeordnet sein. Z.B. ist auf dem Roboterkopf 51 ein Zwischenspeicher für das Zwischenmaterial angeordnet, der es erlaubt, Raupen 2 an mehrere Basiswerkstücke 1 abzugeben. Vorzugsweise ist auch die Dosiervorrichtung 84 auf den Roboterkopf 51 montiert.

Fig. 3b zeigt exemplarisch einen möglichen Verlauf einer Basislinie s_{B} sowie für mehrere Bahnpunkte die gemessenen Distanzen d_{BR} zwischen der Basislinie s_{B} und der Referenzlinie s_{REF}. Exemplarisch ist eine Fügeposition p_{F}, p_{F'} gezeigt, an der das Fügewerkstück 3 mit der Fügelinie s_{F} anliegt. Die Fügeposition p_{F}, p_{F'} ist in Bezug auf ein Referenzsystem mit einem konstanten Abstand zum Basiswerkzeug 41 gewählt, sodass die Unterkante des Basiswerkstücks 1 und die Oberkante des Fügewerkstücks 3 stets denselben Abstand aufweisen. Konsequenterweise weist auch das resultierende bzw. hergestellte Verbundwerkstück 10 somit stets dieselben Aussenabmessungen auf. Abweichungen a_{SB}, a_{SF} der Basislinie s_{B} und der Fügelinie s_{F} von der Basis-Solllinie s_{BS} bzw. der Füge-Solllinie s_{FS} werden durch entsprechende Volumenänderungen bzw. Querschnittänderungen der Raupe 2 kompensiert und zwar derart, dass ein einheitliches Kontaktprofil an der Fügelinie s_{F} des Fügewerkstücks 3 resultiert (siehe auch Fig. 3c).

Die Fügeposition p_{F} bzw. p_{F}' wird dabei derart gewählt, dass ein möglichst geringer Abstand zwischen dem Basiswerkstück 1 und dem Fügewerkstück 3 mit möglichst geringem Materialverbrauch und trotzdem eine optimale Verbindung und gegebenenfalls Abdichtung zwischen dem Basiswerkstück 1 und dem Fügewerkstück 3 resultiert. Die Fügeposition p_{F} kann dabei oberhalb oder unterhalb der Referenzlinie s_{REF} liegen, die derart gewählt wird, dass optimale Messergebnisse erzielt werden.

Symbolisch ist eingezeichnet, mit welcher Höhe h₂₁ die Raupe 2 aufgetragen wird. Die Höhe h₂₁ entspricht dabei der Oberkante der Raupe 2, die vorzugsweise parallel zur Referenzlinie s_{REF} verläuft, während die Unterkante der Raupe 2 der Basislinie s_{B} folgt. Die Oberkante der Raupe 2 verläuft dabei normalerweise parallel zur Referenzlinie s_{REF}, falls die Fügelinie s_{F} der Füge-Solllinie s_{FS} folgt. Sofern dies nicht der Fall ist, verläuft die Oberkante der Raupe 2 typischerweise entsprechend dem Verlauf der vermessenen Fügelinie s_{F}.

Die Höhe h₂₁, die oberhalb der Fügeposition p_{F} liegt ist dabei derart gewählt, dass die Raupe 2 beim Aufsetzen des Fügewerkstücks 3 um ein definiertes Mass deformiert wird. Nach dem Aufsetzen des Fügewerkstücks 3 liegt die Höhe h₂₂ der Oberkante der Raupe 2 daher auf der Höhe der Fügelinie s_{F}. Die Deformation der Raupe 2 bzw. die Höhenreduktion wird entsprechend dem gewünschten Kontaktprofil gewählt und kann z.B. 10% bis 50 % oder mehr betragen. Wie erwähnt, kann die Raupe 2 einen beliebigen Querschnitt aufweisen.

Fig. 3c zeigt exemplarisch den Verlauf der Basislinie s_{B} auf dem Basiswerkstück 1 und den Verlauf der Fügelinie s_{F} auf dem Fügewerkstück 3, gemessene Distanzen d_{BR} zwischen der Basislinie s_{B} und der Referenzlinie s_{REF}, gemessene Distanzen d_{FR} zwischen der Fügelinie s_{F} und der Referenzlinie s_{REF}; die Basis-Solllinie s_{BS} und die Füge-Solllinie s_{FS}, den Offset o_{BR}, o_{FR} zwischen der Basis-Solllinie s_{BS} und der Füge-Solllinie s_{FS} und der Referenzlinie s_{REF}, sowie gemessene Abweichungen a_{SB}, a_{SF} der Basislinie s_{B} und der Fügelinie s_{F} von der Basis-Solllinie s_{BS} bzw. der Füge-Solllinie s_{FS}. In diesem Beispiel ist nur eine Referenzlinie s_{REF} vorgesehen. Vorzugsweise werden die Abweichungen a_{SB}, a_{SF} der Basislinie s_{B} und der Fügelinie s_{F} von der Basis-Solllinie s_{BS} bzw. der Füge-Solllinie s_{FS}, die der Differenz der gemessenen Distanz d_{BR} bzw. d_{FR} und des zugehörigen Offsets o_{BR} bzw. o_{FR} entsprechen, jedoch unabhängig voneinander vermessen. Falls das Basiswerkstück 1 und in diesem Abstand miteinander verbunden werden, entspricht der Raum zwischen der Basislinie s_{B} und der Fügelinie s_{F} entspricht dabei dem Volumenverlauf des später aufgetragenen Zwischenmaterials bzw. der Raupe.

Fig. 4a zeigt die Anlage von Fig. 2 mit dem Roboter 5, der die Messvorrichtung 95 und eine Düse 85 zur Abgabe der Raupe 2 trägt. Der Roboterkopf 51 ist derart drehbar ausgebildet, dass die Messvorrichtung 95 und die Düse 85 hintereinander der Referenzlinie s_{REF} folgen können. Die Düse 85 ist dabei nach oben oder nach unten verschoben, sodass die Raupe 2 mit dem gewünschten Querschnitt auf die Basislinie s_{B} aufgetragen werden kann.

Wie Fig. 4b zeigt, wird die Raupe 2 derart auf die Basislinie s_{B} des Basiswerkstücks 1 aufgetragen werden, dass eine Abweichung des tatsächlichen Verlaufs der Basislinie s_{B} von einer Basis-Solllinie s_{BS} durch Steuerung des Volumenstroms des Zwischenmaterials bei der Abgabe der Raupe 2 an die Basislinie s_{B} kompensiert wird. Die Oberkante der Raupe 2 liegt auf konstanter Höhe h₂₁, dies in der Annahme, dass die nicht vermessene Fügelinie s_{F} des Fügewerkstücks 3 ideal verläuft. Fig. 4a und Fig. 4b zeigen, dass die Fügelinie s_{F} auf der Höhe der Referenzlinie s_{REF} und unterhalb der Höhe h₂₁ der Oberkante der Raupe 2 liegt, die beim Aufsetzen des Fügewerkstücks 3 deformiert wird.

Mit einem Pfeil ist gezeigt, in welche Richtung der Roboterkopf 51 geführt wird. Die Messvorrichtung 95 wird frontseitig und die Düse 95 nachfolgend geführt. Die Prozesse zur Vermessung des Basiswerkstücks 1 und zum Auftrag der Raupe 2 verlaufen somit simultan, aber zeitlich verschoben.

Fig. 5a zeigt das Fügewerkzeug 42 mit dem daran haftenden Fügewerkstück 3 (in Schnittdarstellung gezeigt), welches mittels des Roboters 5 gegen das mit der Raupe 2 versehene Basiswerkstück 1 in eine Fügeposition geführt und gegebenenfalls dort gehalten wird. Das Fügewerkstück 3 wurde geschnitten, um die Vakuumvorrichtung 421 freizulegen, mittels der das Fügewerkstück 3, z.B. die Frontscheibe eines Fahrzeugs, gehalten wird.

Fig. 5b zeigt die Fügevorrichtung 4 von Fig. 1 mit dem auf das Basiswerkzeug 41 aufgesetzten Fügewerkzeug 42 und dem Basiswerkstück 1 (in Schnittdarstellung gezeigt) und dem Fügewerkstück 3 (in Schnittdarstellung gezeigt), die von der Fügevorrichtung 4 in einem definierten Abstand voneinander gehalten sind und zwischen denen die Raupe 2 vorgesehen ist. Nach Verfestigung der Raupe 2 liegt das Verbundwerkstück 10 mit den geforderten Aussenabmessungen vor.

### Bezugszeichenliste

- 1: Basiswerkstück
- 10: Verbundwerkstück
- 11: Rahmen zur Aufnahme des Fügewerkstücks 3
- 2: Raupe des Zwischenmaterials, ggf. Klebstoffs
- 3: Fügewerkstück
- 4: Fügevorrichtung
- 41: Basiswerkzeug
- 411: Distanzelemente, Distanzsäulen
- 412: Stützelemente
- 413: Basisplatte
- 414: Justierelemente
- 415: Gewindestangen
- 416: Rohre
- 42: Fügewerkzeug
- 423: Fügeplatte
- 421: Vakuumvorrichtung
- 5: Roboter
- 51: Roboterkopf
- 8: Abgabevorrichtung
- 81: Zwischenmaterialspeicher, Klebstoffspeicher
- 82: Heizvorrichtung
- 83: Fördervorrichtung
- 84: Dosiervorrichtung
- 85: Düse
- 9: Steuervorrichtung
- 91: Steuerungsprogramm für den Roboter 5
- 92: Mess- und Kalkulationsprogramm
- 93: Steuerungsprogramm für die Abgabevorrichtung 8
- 95: Messvorrichtung
- a_{SB}: Abweichung Basislinie s_{B} von Basis-Solllinie s_{BS}
- a_{SF}: Abweichung Fügelinie s_{F} von Füge-Solllinie s_{FS}
- d_{BR}: Distanz Basislinie s_{B} und Referenzlinie s_{REF}
- d_{FR}: Distanz Fügelinie s_{F} und Referenzlinie s_{REF}
- h21: Höhe der Raupe 2 vor dem Fügen
- h22: Höhe der Raupe 2 nach dem Fügen
- o_{BR}: Offset der Referenzlinie s_{REF} zur Basis-Solllinie s_{BS}
- o_{FR}: Offset der Referenzlinie s_{REF} zur Füge-Solllinie s_{FS}
- p_{F}: Fügeposition
- s_{B}: Basislinie bzw. Basisfläche
- s_{BS}: Basis-Solllinie
- s_{F}: Fügelinie bzw. Fügefläche
- s_{FS}: Füge-Solllinie
- s_{REF}: Referenzlinie

## Patentansprüche

1. Verfahren zur Herstellung eines Verbundwerkstücks (10), das wenigstens ein Basiswerkstück (1) mit einer Basislinie (s_{B}) und ein Fügewerkstück (3) mit einer der Basislinie (s_{B}) zugewandten Fügelinie (s_{F}) aufweist, zwischen denen eine Raupe (2) eines klebenden oder nicht klebenden Zwischenmaterials eingefügt wird, **dadurch gekennzeichnet,**
a1) dass das Basiswerkstück (1) auf ein Basiswerkzeug (41) aufgesetzt und von diesem stabil gehalten wird; und/oder
a2) dass das Fügewerkstück (3) auf ein Fügewerkzeug (42) aufgesetzt und von diesem stabil gehalten wird; und
b) dass die Raupe (2) derart auf die Basislinie (s_{B}) des Basiswerkstücks (1) oder die Fügelinie (s_{F}) des Fügewerkstücks (3) aufgetragen wird, dass Abweichungen (a_{SB}) des tatsächlichen Verlaufs der Basislinie (s_{B}) von einer Basis-Solllinie (s_{BS}) und/oder Abweichungen (a_{SF}) des tatsächlichen Verlaufs der Fügelinie (s_{F}) von einer Füge-Solllinie (s_{FS}) kompensiert werden.

2. Verfahren nach Anspruch 1, **dadurch gekennzeichnet, dass** die Abweichungen (a_{SB}) des tatsächlichen Verlaufs der Basislinie (s_{B}) von der Basis-Solllinie (s_{BS}) und/oder die Abweichungen (a_{SF}) des tatsächlichen Verlaufs der Fügelinie (s_{F}) von der Füge-Solllinie (s_{FS}) durch Steuerung des Volumenstroms des Zwischenmaterials bei der Abgabe der Raupe (2) an die Basislinie (s_{B}) kompensiert werden.

3. Verfahren nach Anspruch 1 oder 2, **dadurch gekennzeichnet,**
a) **dass** die Abweichungen (a_{SB}) des tatsächlichen Verlaufs der Basislinie (s_{B}) von der Basis-Solllinie (s_{BS}) durch Messung des Verlaufs der Distanz (d_{BR}) zwischen der Basislinie (s_{B}) und einer Referenzlinie (s_{REF}) bestimmt werden, die um einen ersten Offset (o_{BR}) von der Basis-Solllinie (s_{BS}) beabstandet ist; und/oder
b) **dass** Abweichungen (a_{SF}) des tatsächlichen Verlaufs der Fügelinie (s_{F}) von der Füge-Solllinie (s_{FS}) durch Messung des Verlaufs der Distanz (d_{FR}) zwischen der Fügelinie (s_{F}) und einer Referenzlinie (s_{REF}) bestimmt wird, die um einen zweiten Offset (o_{FR}) von der Füge-Solllinie (s_{FS}) beabstandet ist.

4. Verfahren nach Anspruch 3, **dadurch gekennzeichnet, dass** die Messung des Verlaufs der Distanz (d_{BR}) oder des tatsächlichen Verlaufs der Basislinie (s_{B}) oder des tatsächlichen Verlaufs der Fügelinie (s_{F})
a) sequenziell durch punktuelle Messungen anhand einer Messvorrichtung (95), vorzugsweise eines Laserdistanzsensors, eines konfokalen Distanzsensors oder eines mechanischen Messabtasters, erfolgt, die entlang der Referenzlinie (s_{REF}) geführt wird und die die Basislinie (s_{B}) oder die Fügelinie (s_{F}) optisch oder mechanisch abtastet; oder
b) durch eine Linienmessung, vorzugsweise durch Lasertriangulation oder mittels eines Laserscanners, erfolgt; oder
c) durch eine Flächenmessung, vorzugsweise mittels eines 3D-Laserscanners, durch Stereovision oder mit strukturiertem Licht, erfolgt.

5. Verfahren nach Anspruch 4, **dadurch gekennzeichnet, dass** eine Führungsvorrichtung, wie ein Roboter (5) mit einem Roboterarm, vorgesehen ist, welche die Messvorrichtung (95) hält und kontinuierlich oder schrittweise entlang der Referenzlinie (s_{REF}) führt, wobei während der Führung oder während des Stillstands der Messvorrichtung (95) jeweils Punktmessungen, oder Linienmessungen oder Flächenmessungen durchgeführt werden, wobei für den Roboter (5) Bahnpunkte entlang der Referenzlinie (s_{REF}) und vorzugsweise den Bahnpunkten zugeordnete Geschwindigkeiten bestimmt und abgespeichert werden.

6. Verfahren nach einem der Ansprüche 1 bis 5, **dadurch gekennzeichnet, dass** die Basis-Solllinie (s_{BS}) mit Bezug auf wenigstens einen Referenzpunkt oder wenigstens eine Referenzlinie festgelegt wird, die auf dem Basiswerkzeug (41) vorgesehen sind, und dass die Füge-Solllinie (s_{FS}) mit Bezug auf wenigstens einen Referenzpunkt oder wenigstens eine Referenzlinie festgelegt wird, die auf dem Fügewerkzeug (42) vorgesehen sind.

7. Verfahren nach einem der Ansprüche 1 bis 6, **dadurch gekennzeichnet, dass** die die Basislinie (s_{B}) und/oder die Fügelinie (s_{F}) linear oder flächig entsprechend einer resultierenden Kontaktzone zwischen der Raupe (2) und dem Basiswerkstück (1) oder zwischen der Raupe (2) und dem Fügewerkstück (3) vermessen wird, wonach für die Abweichungen (a_{SB}) des tatsächlichen Verlaufs der Basislinie (s_{B}) von einer Basis-Solllinie (s_{BS}) und/oder die Abweichungen (a_{SF}) des tatsächlichen Verlaufs der Fügelinie (s_{F}) von einer Füge-Solllinie (s_{FS}) unter Berücksichtigung der gemessenen Linie oder Fläche entsprechende Volumenanteile berechnet werden.

8. Verfahren nach einem der Ansprüche 1 bis 7, **dadurch gekennzeichnet, dass** der Volumenstrom des Zwischenmaterials und somit der Querschnitt der Raupe (2) derart gewählt wird, dass die Raupe (2) nach dem Aufsetzen des Fügewerkstücks (3) mit einem Kontaktprofil am Fügewerkstück (3) anliegt, welches eine Breite aufweist, die eine sichere Kontaktierung und/oder Abdichtung gewährleistet.

9. Verfahren nach einem der Ansprüche 1 bis 8, **dadurch gekennzeichnet, dass** nach dem Auftrag der Raupe (2) auf das Basiswerkstück (1) das Fügewerkstück (3) gegebenenfalls mittels des Roboters (5) in eine Fügeposition (P_{F}) verschoben und dort gehalten wird bis eine gewünschte Verfestigung des Zwischenmaterials eingetreten ist, wobei die Fügeposition (P_{F}) vorzugsweise derart gewählt ist, dass das Basiswerkstück (1) und das Fügewerkstück (3) mit der Basis-Solllinie (s_{BS}) und der Füge-Solllinie (s_{FS}) in einem vorbestimmten Abstand zueinander ausgerichtet sind.

10. Verfahren nach Anspruch 9, **dadurch gekennzeichnet, dass** die Fügelinie (s_{F}) nach Erreichen der Fügeposition (P_{F}) innerhalb der Referenzlinie (s_{REF}) liegt oder in die eine oder andere Richtung dazu verschoben ist.

11. Verfahren nach einem der Ansprüche 1 bis 10, **dadurch gekennzeichnet, dass** die Raupe (2) synchron zur Vermessung der Basislinie (s_{B}) oder erst nach vollständiger Vermessung der Basislinie (s_{B}) und/oder der Fügelinie (s_{F}) aufgetragen wird.

12. Anlage zur Herstellung eines Verbundwerkstücks (10) gemäss dem Verfahren nach einem der Ansprüche 1 bis 11, das ein Basiswerkstück (1) mit einer Basislinie (s_{B}) und ein Fügewerkstück (3) mit einer dem Basiswerkstück (1) zugewandten Fügelinie (s_{F}) aufweist, zwischen denen eine Raupe (2) eines klebenden oder nicht klebenden Zwischenmaterials einfügbar ist, mittels der Abweichungen (a_{SB}) des tatsächlichen Verlaufs der Basislinie (s_{B}) von der Basis-Solllinie (s_{BS}) und/oder die Abweichungen (a_{SF}) des tatsächlichen Verlaufs der Fügelinie (s_{F}) von der Füge-Solllinie (s_{FS}) durch Steuerung des Volumenstroms des Zwischenmaterials bei der Abgabe der Raupe (2) an die Basislinie (s_{B}) kompensiert werden.

13. Anlage nach Anspruch 12, umfassend
a) ein Basiswerkzeug (41) zum Halten des Basiswerkstücks (1),
b) ein Fügewerkzeug (42) zum Halten des Fügewerkstücks (3),
c) eine Abgabevorrichtung (8, 85) zur dosierten Abgabe der Raupe auf die Basislinie (s_{B}),
d) eine Distanzhaltevorrichtung (5, 411) zum Halten des Fügewerkzeugs (42) in einem definierten Abstand vom Basiswerkzeug (41),
e) eine Messvorrichtung (95) zur Vermessung der Abweichungen (a_{SB}) des tatsächlichen Verlaufs der Basislinie (s_{B}) von der Basis-Solllinie (s_{BS}) und/oder zur Vermessung der Abweichungen (a_{SF}) des tatsächlichen Verlaufs der Fügelinie (s_{F}) von der Füge-Solllinie (s_{FS}), und
f) eine Steuervorrichtung (9; 95) zur Steuerung der Abgabevorrichtung (8, 85), derart dass die Abweichungen (a_{SB}) des tatsächlichen Verlaufs der Basislinie (s_{B}) von der Basis-Solllinie (s_{B}) und/oder die Abweichungen (a_{SF}) des tatsächlichen Verlaufs der Fügelinie (s_{F}) von der Füge-Solllinie (s_{FS}) durch Dimensionierung oder Steuerung des Volumenstroms der abgegebenen Raupe (2) kompensierbar sind.

14. Anlage nach Anspruch 13, **dadurch gekennzeichnet, dass** wenigstens ein Roboter (5) vorgesehen ist, mittels dessen die Messvorrichtung (95) und die Abgabevorrichtung (8, 85) zur dosierten Abgabe der Raupe durch eine Düse (85) derart gehalten und geführt sind, dass die Abweichungen (a_{SB}) des tatsächlichen Verlaufs der Basislinie (s_{B}) von der Basis-Solllinie (s_{B}) und/oder die Abweichungen (a_{SF}) des tatsächlichen Verlaufs der Fügelinie (s_{F}) von der Füge-Solllinie (s_{FS}) vermessbar sind und die Raupe (2) nach Abschluss der Vermessung oder während der Vermessung auf die Basislinie (s_{B}) auftragbar ist.

15. Fügevorrichtung (4) für eine Anlage nach Anspruch 12, mit einem Basiswerkzeug (41), das dem Halten des Basiswerkstücks (1) dient, und einem Fügewerkzeug (42), das dem Halten des Fügewerkstücks (3) dient, und mit einer Haltevorrichtung (5, 411) gegebenenfalls in der Ausgestaltung eines Roboters (5), mittels der das Basiswerkzeug (1) und das Fügewerkzeug (42) in einem definierten Abstand voneinander fixierbar sind.
